# EUROPEAN PATENT SPECIFICATION

(11) **EP 4 116 955 B1**
(45) Date of publication and mention of the grant of the patent: **30.10.2024**
(21) Application number: 21200427.9
(22) Date of filing: 01.10.2021
(51) Int. Cl.: G08G 1/14, G08G 1/16

(54) **MAPPING METHOD AND DEVICE, GENERATION METHOD AND DEVICE, AND MAPPING SYSTEM OF PARKING MAP**
VERFAHREN UND VORRICHTUNG ZUR ABBILDUNG, VERFAHREN UND VORRICHTUNG ZUR ERZEUGUNG UND SYSTEM ZUR KARTIERUNG EINER PARKKARTE
PROCÉDÉ ET DISPOSITIF DE CARTOGRAPHIE, PROCÉDÉ ET DISPOSITIF DE GÉNÉRATION ET SYSTÈME DE CARTOGRAPHIE DE CARTE DE STATIONNEMENT

(30) Priority: 08.07.2021 CN 202110773990
(43) Date of publication of application: 11.01.2023
(73) Proprietor: Guangzhou Xiaopeng Autopilot Technology Co., Ltd., Guangzhou, Guangdong 510000 (CN)
(72) Inventor: Xia, Zhixun, Guangzhou, 510000 (CN); Peng, Jili, Guangzhou, 510000 (CN); Luo, Feiyang, Guangzhou, 510000 (CN); Dai, Zhongjun, Guangzhou, 510000 (CN)
(74) Representative: Habermann, Hruschka & Schnabel

(56) References cited:
- CN-A- 111 439 257
- CN-A- 111 746 504
- CN-A- 112 802 346

## Description

### FIELD

The present disclosure relates to the field of autonomous driving technology, and in particular, to a mapping method, a mapping device, a generation method, a generation device, and a mapping system of a parking map.

### BACKGROUND

With the advance of autonomous driving technology, automatic memory parking is one of the important applications of autonomous driving technology. The memory parking involves: building a corresponding parking map for the same parking route and the same parking spaceby obtaining historical parking data from a vehicle terminal; and when the vehicle terminal is to be parked into the same parking space, the vehicle terminalperforming the automatic memory parking based on the parking map.

In the related art, the building of the parking map requires the user's participation and supervision throughout the process, and requires the user to make selections or adjustments timely until the map is completely built. Such a mapping method may bring the user with negative emotions and tension to when an abnormality or failure occurs in the process of mapping, thereby causing bad experience. In the meantime, the user needs to park multiple times to cooperate with the mapping, which may affect the mapping efficiency. CN 1128023 46Adiscloses an autonomous parking system and method based on cloud sharing and map fusion. According to the autonomous parking system and method,track map sharing, track map selection and track map fusion are carried out at a cloud end, so that a map does not need to be established by a user, track map multiplexing is carried out only according to selection of GPS coordinates, scene semantic information, track label classification and the like, and a tracking route is optimized; and a cloud-vehicle end-user terminal cooperative communication mechanism is established, the cloud is used for storing, processing and multiplexing the map.

### SUMMARY

In order to solve or partially solve the problems existing in the related art, the present disclosure provides a mapping method, a mapping device, a generation method, a generation device, and a mapping system of a parking map. With the mapping method of the parking map, it can be avoided that the abnormality or failure, when occurring in the mapping process, brings the user with the negative emotions and tension, thereby avoiding user's bad experience. In the meantime, the user does not need to park multiple times to cooperate with the mapping, thereby improving the mapping efficiency.

A first aspect of the present disclosure provides a mapping method of a parking map, including: collecting parking data of at least two parkings from a vehicle terminal, the parking data indicating a parking route and a parking space, wherein the parking data of at least two parkings is parking data respectively collected from the same vehicle terminal in different time periods; performing comparison among the collected parking data from the same vehicle terminal; generating, for at least two parkings having identical parking data from the same vehicle terminal, a to-be-confirmed parking map corresponding to the identical parking data; transmitting the to-be-confirmed parking map to the vehicle terminal for parking data comparison with current parking data, which includes a current parking route along which the vehicle terminal currently runs and a current parking space where the vehicle terminal parks, when a parking route of the to-be-confirmed parking map is the same as the current parking route of the vehicle terminal, a parking space of the to-be-confirmed parking map is the same as the current parking space of the vehicle terminal, and the to-be-confirmed parking map conforms to user's current parking behavior; and when the parking data of the to-be-confirmed parking map is the same as the current parking data of the vehicle terminal, receiving parking confirmation information of by the vehicle terminal about the to-be-confirmed parking map, and confirming the to-be-confirmed parking map in accordance with the the parking confirmation information. Said generating, for at least two parkings having identical parking data, a to-be-confirmed parking map corresponding to the identical parking data includes: determining, for the at least two parkings having the identical parking data, a maturity of the identical parking data based on a predetermined maturity determination condition; and generating the to-be-confirmed parking map when the maturity of the identical parking data reaches a predetermined maturity value. The maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data

In an embodiment, the method further includes: collecting new parking data from the vehicle terminal in response to the collected parking data being different from each other.

In an embodiment, the method further includes: pre-setting a predetermined storage quantity of different parking data indicating different parking routes and/or different parking spaces; and retaining latest different parking data conforming to the predetermined storage quantity, when a quantity of the collected different parking data is greater than the predetermined storage quantity.

In an embodiment, said transmitting the to-be-confirmed parking map to the vehicle terminal for parking data comparison with current parking data includes: transmitting, to the vehicle terminal, a to-be-confirmed parking map conforming to a predetermined transmission condition, when more than one to-be-confirmed parking maps are generated.

A second aspect of the present disclosure provides a generation method of a parking map, including: receiving a to-be-confirmed parking map, where the to-be-confirmed parking map is generated based on identical parking data of at least two parkings collected by a cloud terminal, parking data of each parking indicating a parking route and a parking space; comparing the to-be-confirmed parking map with current parking data to generate a corresponding parking data comparison result, wherein the current parking data includes a current parking route along which a vehicle terminal currently runs and a current parking space where the vehicle terminal parks; and transmitting feedback information generated based on the result of the parking data comparison to the cloud terminal when a parking route of the to-be-confirmed parking map is the same as the current parking route of the vehicle terminal, a parking space of the to-be-confirmed parking map is the same as the current parking space of the vehicle terminal, and the to-be-confirmed parking map conforms to user's current parking behavior, wherein the feedback information is used for the cloud terminal to confirm the to-be-confirmed parking map. For the at least two parkings having the identical parking data, a maturity of the identical parking data is determined based on a predetermined maturity determination condition, and the to-be-confirmed parking map is generated when the maturity of the identical parking data reaches a predetermined maturity value. The maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

In an embodiment, said transmitting feedback information generated based on the result of the parking data comparison to the cloud terminal includes: displaying an interactive confirmation interface, when parking data of the to-be-confirmed parking map is identical with the current parking data of the vehicle terminal; and transmitting to the cloud terminal the feedback information generated by a user on the interactive confirmation interface.

Athird aspect of the present disclosure provides a mapping device of a parking map, including: a parking data collection module configured to collect parking data of at least two parkings from a vehicle terminal, the parking data indicating a parking route and a parking space, wherein the parking data of at least two parkings is parking data respectively collected from the same vehicle terminal in different time periods; a parking data comparison module configured to perform comparison among the collected parking data from the same vehicle terminal; a to-be-confirmed parking map generation module configured to generate, for at least two parkings having identical parking data from the same vehicle terminal, a to-be-confirmed parking map corresponding to the identical parking data; a to-be-confirmed parking map transmitting module configured to transmit the to-be-confirmed parking map to the vehicle terminal for parking data comparison with current parking data, which includes a current parking route along which a vehicle terminal currently runs and a current parking space where the vehicle terminal parks, when a parking route of the to-be-confirmed parking map is the same as the current parking route of the vehicle terminal, a parking space of the to-be-confirmed parking map is the same as the current parking space of the vehicle terminal, and the to-be-confirmed parking map conforms to user's current parking behavior; and a feedback receiving module configured to: receive parking confirmation information of the vehicle terminal about the to-be-confirmed parking map and confirm the to-be-confirmed parking map in accordance with the parking confirmation information, when the parking data of the to-be-confirmed parking map is the same as the current parking data of the vehicle terminal. The to-be-confirmed parking map generation module is further configured to: determine, for the at least two parkings having the identical parking data, a maturity of the identical parking data based on a predetermined maturity determination condition; and generate the to-be-confirmed parking map when the maturity of the identical parking data reaches a predetermined maturity value. The maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

A fourth aspect of the present disclosure provides a generation device of a parking map, including: a to-be-confirmed parking map receiving module configured to receive a to-be-confirmed parking map, where the to-be-confirmed parking map is generated based identical parking data of at least two parkings collected by a cloud terminal, and parking data of each parking indicates a parking route and a parking space; a parking data comparison module configured to compare the to-be-confirmed parking map with current parking data to generate a corresponding parking data comparison result, wherein the current parking data includes a current parking route along which a vehicle terminal currently runs and a current parking space where the vehicle terminal parks; and a feedback transmitting module configured to transmit feedback information generated based on the result of the parking data comparison to the cloud terminal when a parking route of the to-be-confirmed parking map is the same as the current parking route of the vehicle terminal, a parking space of the to-be-confirmed parking map is the same as the current parking space of the vehicle terminal, and the to-be-confirmed parking map conforms to user's current parking behavior. For the at least two parkings having the identical parking data, a maturity of the identical parking data is determined based on a predetermined maturity determination condition, and the to-be-confirmed parking map is generated when the maturity of the identical parking data reaches a predetermined maturity value. The maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

A fifth aspect of the present disclosure provides a mapping system of a parking map, including a cloud terminal including the mapping device described above and a vehicle terminal including the generation device described above.

The technical solution provided by the application can have the following beneficial effects.

In the mapping method of the parking map of the present disclosure, the parking data of at least two parkings is collected from a vehicle terminal; comparison among the collected parking data is performed; for at least two parkings having identical parking data, the to-be-confirmed parking map corresponding to the identical parking data is built; the to-be-confirmed parking map is transmitted to the vehicle terminal for parking data comparison with current parking data; and feedback information generated by the vehicle terminal based on a result of the parking data comparison is received, and the to-be-confirmed parking map is confirmed or adjusted in accordance with the feedback information. With such a design, the parking map can be built through autonomous collection of parking data and autonomous comparison of parking data, without requiring the user to frequently participate in and supervise the mapping process. 0

It should be understood that the above general description and the following detailed description are only for purposes of illustration and explanation, rather than limiting the present disclosure.

### BRIEF DESCRIPTION OF DRAWINGS

Through a more detailed description of the exemplary embodiments of the present disclosure in conjunction with the accompanying drawings, the above and additional objectives, features, and advantages of the present disclosure will become more apparent. Among them, in the exemplary embodiments of the present disclosure, the same reference numerals generally represent the same components.
FIG. 1 is a schematic flowchart of a mapping method of a parking map according to an embodiment of the present disclosure;
FIG. 2 is a schematic flowchart of a generation method of a parking map according to an embodiment of the present disclosure;
FIG. 3 is another schematic flowchart of a mapping method of a parking map according to another embodiment of the present disclosure;
FIG. 4 is another schematic flowchart of a mapping method of a parking map according to another embodiment of the present disclosure;
FIG. 5 is a schematic structural diagram of a mapping device of a parking map according to an embodiment of the present disclosure;
FIG. 6 is a schematic structural diagram of a generation device of a parking map according to another embodiment of the present disclosure; and
FIG. 7 is a schematic structural diagram of a mapping system of a parking map according to an embodiment of the present disclosure.

### DESCRIPTION OF EMBODIMENTS

Hereinafter, the embodiments of the present disclosure will be described in more detail with reference to the accompanying drawings. Although the embodiments of the present disclosure are illustrated in the drawings, it should be understood that the present disclosure can be implemented in various forms and should not be limited by the embodiments set forth herein. On the contrary, these embodiments are provided to make the present disclosure more thorough and complete, and to fully convey the scope of the present disclosure to those skilled in the art.

The terms used in the present disclosure are only for the purpose of describing specific embodiments, and are not intended to limit the application. The singular forms of "a", "said" and "the" used in the present disclosure and the appended claims are also intended to include plural forms, unless the context clearly indicates otherwise. It should also be understood that the term "and/or" as used herein refers to and includes any or all possible combinations of one or more associated listed items.

It should be understood that, although the terms "first", "second", "third", etc. may be used in the present disclosure to describe various information, the information should not be limited to these terms. These terms are only used to distinguish information of the same type from each other. For example, without departing from the scope of the present disclosure, first information may also be referred to as second information, and similarly, second information may also be referred to as first information. Thus, the features defined with "first" and "second" may explicitly or implicitly include one or more of these features. In the description of the present disclosure, "plurality" means two or more than two, unless otherwise specifically defined.

Memory parking refers to a process that a corresponding parking map is built for the same parking route and the same parking space by obtaining historical parking data from vehicle terminal, and the vehicle terminal performs a memory parking in accordance with the parking map when the vehicle terminal is to be parked into the same parking space. In the related art, the building of the parking map requires the user's participation and supervision throughout the process, and requires the user to make selections or adjustments timely until the map is completely built. Such a mapping method may bring the user with negative emotions and tension to when an abnormality or failure occurs in the process of mapping, thereby causing bad experience. In the meantime, the user needs to park multiple times to cooperate with the mapping, which may affect the mapping efficiency.

In view of the above-mentioned problems, the embodiments of the present disclosure provide a mapping method of a parking map, which can avoid that the abnormality or failure, when occurring in the mapping process, brings the user with the negative emotions and tension, thereby avoiding user's bad experience. Meanwhile, the user does not need to park multiple times to cooperate with the mapping, thereby improving the mapping efficiency.

The technical solutions of the embodiments of the present disclosure will be described in detail below with reference to the accompanying drawings.

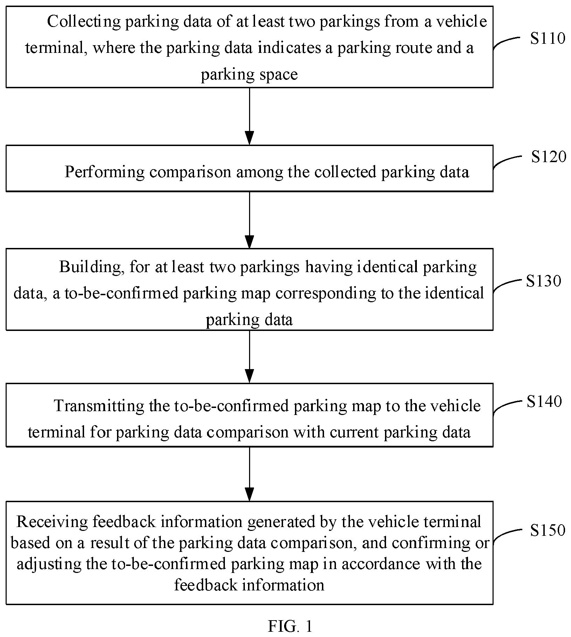

Referring to FIG. 1, the mapping method of a parking map as illustrated by an embodiment of the present disclosure includes the following steps S110 to S150.

In step S 110, parking data of at least two parkings from a vehicle terminal is collected, where the parking data indicates a parking route and a parking space.

The parking data of at least two parkings refers to parking data respectively collected from the same vehicle in different time periods. The parking data of each parking indicates a parking route and a parking space. The parking data collected during one parking may be identical with or different from the parking data collected during a different one parking. For example, for the parking data of two parkings, the parking routes of the two parkings are the same, and the parking spaces of the two parkings are the same; or the parking routes of the two parkings are different, and the parking spaces of the two parkings are the same; or the parking routes of the two parkings are different, and the parking spaces of the two parkings are different. It can be understood that the parking data of each parking has its own parking route and corresponding parking space, the same parking space may correspond to different parking routes, and different parking spaces correspond to different parking routes. In an embodiment, the parking route can be a route for the vehicle to drive from a preset starting point to the parking space after entering the parking lot.

Further, the cloud terminal actively and silently collects the parking data from the vehicle terminal, and the collected parking data is stored on the cloud terminal. In an embodiment, the parking data may be historical data of memory parking, or data of parking conducted by a user.

In step S120, comparison is performed among the collected parking data.

The parking routes and parking spaces of the parking data of different parkings are correspondingly compared with each other. For example, the parking route of parking data of a first parking is compared with the parking route of parking data of a second parking, and the parking space of the parking data of the first parking is compared with the parking space of the parking data of the second parking. That is, when the comparison is performed among the collected parking data, the parking spaces and the parking routes are independently and correspondingly compared.

In step S130, for at least two parkings having identical parking data, a to-be-confirmed parking map corresponding to the identical parking data is built.

The parking data of one parking may be identical with or different from the parking data of a different one parking. In an embodiment, for the parking data of two parkings, the parking data of two parkings being identical refers to that the parking spaces of the two parkings are the same, the parking routes of the two parkings are the same, and the parking data of the two parkings is collected by driving into the same parking space in the same parking route. If the parking spaces of the two parkings are different, and/or the parking routes of the two parkings are different, the parking data of the two parkings is different. When the identical parking data of two parkings is collected, the corresponding to-be-confirmed parking map is built based on the identical parking data. It can be understood that the to-be-confirmed parking map built at this time cannot be directly used for automatic memory parking.

When parking data of three or more parkings, e.g., four parkings, is collected, when two parkings of the four parkings have the identical parking data, then a to-be-confirmed parking map can be built based on the identical parking data of the two parkings; when the other two parkings have different parking data, the parking data of the other two parkings cannot build a to-be-confirmed parking map; or when the other two parkings have identical parking data, another to-be-confirmed parking map will be built based on the identical parking data of the other two parkings. That is, two groups of identical parking data exist among the collected parking data of the four parkings, and two corresponding to-be-confirmed parking maps are built respectively. Alternatively, when three parkings among the four parkings have the identical parking data, and the parking data the remaining one parking is different from the parking data of the three parkings, one to-be-confirmed parking map is built based on the parking data of the three parkings. By analogy, based on the parking data collected in successive parkings, the different parkings are compared with each other in terms of the parking data to build a corresponding to-be-confirmed parking map. In an embodiment, at least one to-be-confirmed parking map can be correspondingly built based on the parking data collected in the successive parkings. It can be understood that the to-be-confirmed parking map includes the parking route and the parking space in the corresponding parking data. The different to-be-confirmed parking maps are different from each other in terms of the parking data.

In step S 140, the to-be-confirmed parking map is transmitted to the vehicle terminal for parking data comparison with current parking data.

In order to verify whether the to-be-confirmed parking map built in the previous step meets the actual needs of the user, the cloud terminal transmits the to-be-confirmed parking map that has been built to the vehicle terminal, and performs the parking data comparison between the to-be-confirmed parking map and the current parking data of the vehicle terminal. In an embodiment, the current parking data includes the current parking route along which the vehicle terminal currently runs and the current parking space where the vehicle terminal parks. In order to verify whether the to-be-confirmed parking map is practical based on the to-be-confirmed parking map including the parking route and the parking space, the parking data comparison is to compare the parking route in the to-be-confirmed parking map with the current parking route of the current parking data, and to compare the parking space in the to-be-confirmed parking map with the current parking space of the current parking data.

Further, in other embodiments, one, two, or more to-be-confirmed parking maps are transmitted to the vehicle terminal. When two or more to-be-confirmed parking maps are transmitted to the vehicle terminal, each to-be-confirmed parking map can be separately compared with the current parking data to confirm whether the parking data of the to-be-confirmed parking map is the same as the current parking data, so as to determine whether the to-be-confirmed parking map can be used in the actual memory parking.

In step S 150, feedback information generated by the vehicle terminal based on a result of the parking data comparison is received, and the to-be-confirmed parking map is confirmed or adjusted in accordance with the feedback information.

It can be understood that, after the vehicle terminal receives the to-be-confirmed parking map, the vehicle terminal performs the parking data comparison between the to-be-confirmed parking map and the current parking data of the vehicle terminal, and the vehicle terminal generates the corresponding result of the parking data comparison. According to different parking data comparison results, the vehicle terminal generates corresponding feedback information.

Further, according to the result of the parking data comparison, in an embodiment, if the parking data of the to-be-confirmed parking map is the same as the current parking data of the vehicle terminal, the parking confirmation information of the vehicle terminal about the to-be-confirmed parking map is received. When the parking data of the to-be-confirmed parking map is the same as the current parking data, it indicates that the current parking route in the current parking data of the vehicle terminal is the same as the parking route of the to-be-confirmed parking map, and the current parking space is the same as the parking space of the to-be-confirmed parking map, i.e., the to-be-confirmed parking map conforming to the user's actual parking behavior. That is, through the confirmation of the vehicle terminal, the corresponding feedback information can be generated, the feedback information is the parking confirmation information, the vehicle terminal transmits the feedback information about the to-be-confirmed parking map to the cloud terminal. Then, based on the feedback information, the cloud terminal can confirm that the building of the to-be-confirmed parking map is completed, and the to-be-confirmed parking map is a parking map that can be used in the actual automatic memory parking.

Further, according to the result of the parking data comparison, in an embodiment, if the parking data of the to-be-confirmed parking map is different from the current parking data of vehicle terminal, the to-be-confirmed parking map is adjusted. In an embodiment, the to-be-confirmed parking map can be adjusted by replacing a new to-be-confirmed parking map until the new to-be-confirmed parking map is confirmed, thereby building the parking map.

To sum up, in the mapping method of the parking map of the present disclosure, the parking data of at least two parkings is collected from a vehicle terminal; the comparison among the collected parking data is performed; for at least two parkings having identical parking data, the to-be-confirmed parking map corresponding to the identical parking data is built; the to-be-confirmed parking map is transmitted to the vehicle terminal for parking data comparison with current parking data; and feedback information generated by the vehicle terminal based on a result of the parking data comparison is received, and the to-be-confirmed parking map is confirmed or adjusted in accordance with the feedback information. With such a design, the parking map can be built through autonomous collection of parking data and autonomous comparison of parking data, without requiring the user to frequently participate in and supervise the mapping process. In this way, it can be avoided that the abnormality or failure, when occurring in the mapping process, brings the user with the negative emotions and tension, thereby avoiding the user's bad experience, and meanwhile, the user does not need to park multiple times to cooperate with the mapping, thereby improving the mapping efficiency.

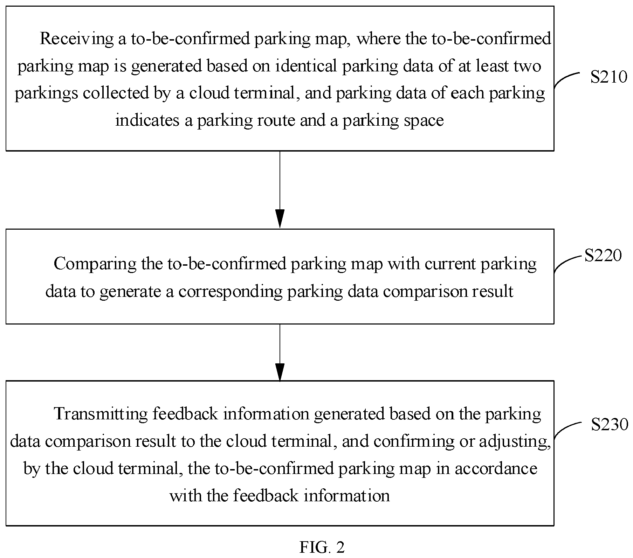

Referring to FIG. 2, in an embodiment, the present disclosure also provides a generation method of a parking map, including the following steps S210 to S230.

In step S210, a to-be-confirmed parking map is received. The to-be-confirmed parking map is generated based on identical parking data of at least two parkings collected by a cloud terminal, and the parking data of each parking indicates a parking route and a parking space.

In an embodiment, the vehicle terminal receives the to-be-confirmed parking map transmitted from the cloud terminal, so as to perform a parking data comparison of the to-be-confirmed parking map in a subsequent step. Since the to-be-confirmed parking map is generated based on the identical parking data of at least two parkings, the to-be-confirmed parking map includes the corresponding parking route and parking space of the parking data.

In step S220, the to-be-confirmed parking map is compared with current parking data to generate a corresponding parking data comparison result.

It can be understood that the vehicle terminal can silently obtain the corresponding current parking data in the background based on the manual parking behavior of the user. The current parking data includes the current parking route and the current parking space. When the vehicle is in the process of running and parking, the vehicle terminal silently compares, in the background, the parking route of the to-be-confirmed parking map with the current parking route, and compares the parking space of the to-be-confirmed parking map with the current parking space, so as to generate the corresponding parking data comparison result.

The parking data comparison result may be that the to-be-confirmed parking map is the same as the current parking data, or that the to-be-confirmed parking map is different from the current parking data. In an embodiment, when the parking route of the to-be-confirmed parking map is the same as the current parking route and the parking space is the same as the current parking space, the to-be-confirmed parking map is the same as the current parking data. In an embodiment, when the parking route of the to-be-confirmed parking map is different from the current parking route and/or the parking space of the to-be-confirmed parking map is different from the current parking space, the to-be-confirmed parking map is different from the current parking data.

In step S230, feedback information generated based on the parking data comparison result is transmitted to the cloud terminal, and the to-be-confirmed parking map is confirmed or adjusted by the cloud terminal in accordance with the feedback information.

The vehicle terminal generates corresponding feedback information based on different parking data comparison results, and transmits the feedback information to the cloud terminal. In an embodiment, when the parking data of the parking map is the same as the current parking data of the vehicle terminal, the vehicle terminal displays an interactive confirmation interface, and transmits the feedback information generated by the user on the interactive confirmation interface to the cloud terminal. Further, the user can select the parking information confirmation on the interactive confirmation interface to generate the feedback information including the parking confirmation information, and thus the cloud terminal can confirm the to-be-confirmed parking map in accordance with the feedback information.

In an embodiment, when the parking data of the parking map is different from the current parking data of the vehicle terminal, the vehicle terminal generates corresponding feedback information and transmits the feedback information to the cloud terminal, such that the cloud terminal can adjust the to-be-confirmed parking map.

In summary, in the generation method of the parking map of the present disclosure, the vehicle terminal receives the to-be-confirmed parking map, compares the to-be-confirmed parking map with the current parking data, generates the feedback information based on the parking data comparison result, and transmits the feedback information to the cloud terminal, such that the cloud terminal confirms or adjusts the to-be-confirmed parking map in accordance with the feedback information. With such a design, the vehicle terminal can automatically and silently complete the receiving of the to-be-confirmed parking map and the parking data comparison, and finally send to the cloud terminal to build the corresponding parking map, without requiring the user to frequently participate in and supervise the mapping process. In this way, it can be avoided that the abnormality or failure, when occurring in the mapping process, brings the user with the negative emotions and tension, thereby avoiding the user's bad experience, and meanwhile, the user does not need to park multiple times to cooperate with the mapping, thereby improving the mapping efficiency.

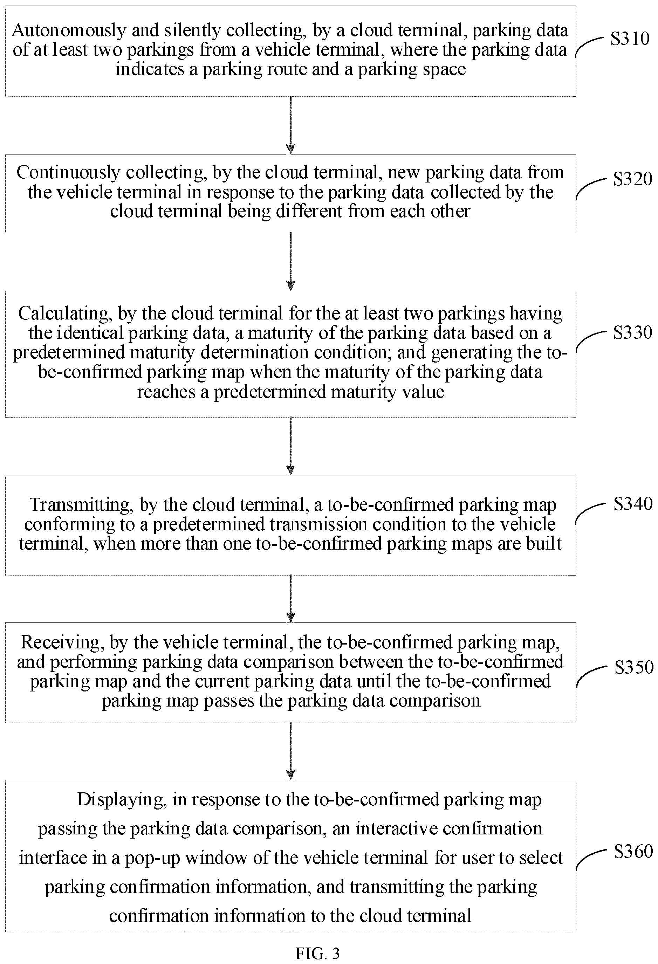

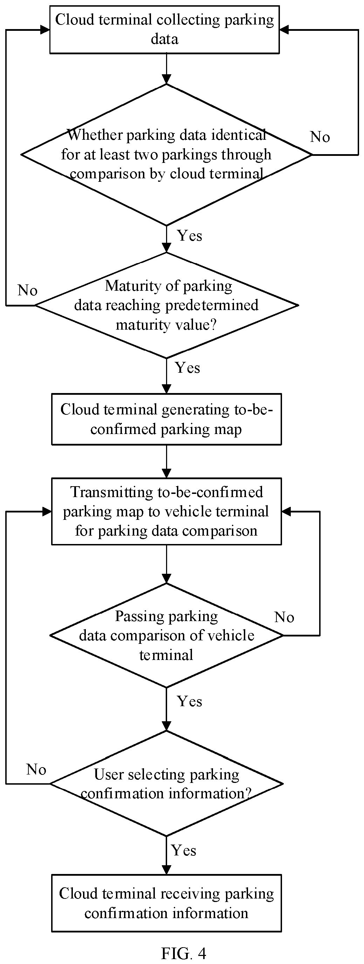

In order to facilitate a further understanding of the mapping method of the parking map of the present disclosure, referring to FIG. 3 and FIG. 4, the mapping method of the parking map illustrated in the embodiment of the present disclosure includes the following steps S310 to S360.

In step S310, a cloud terminal autonomously and silently collects parking data of at least two parkings from a vehicle terminal, where parking data indicates a parking route and a parking space.

In an embodiment, the cloud terminal may be a server, and the vehicle terminal may be an intelligent terminal device on a vehicle. In an embodiment, the cloud terminal and the vehicle terminal may be in communication connection. In order to avoid the user's tension caused by participation in the mapping process, the cloud terminal autonomously and silently collects the parking data from the vehicle terminal. That is, the cloud terminal does not remind the user to participate in or supervise the mapping process by explicitly indicating various information. In the process of manual parking by the user, the parking route along which the vehicle runs, and the parking space are the parking data required to be collected.

Further, the parking data can be obtained by a positioning device, an image capture device and an ultrasonic sensing device of the vehicle terminal. For example, a Global Positioning System (GPS) of the vehicle terminal can be used to obtain location information about the parking route of the vehicle terminal during parking, a camera device of the vehicle terminal can be used to collect image information and parking space information of the vehicle terminal during parking, and the ultrasonic sensing device can be used to obtain information about the location, distance and image of obstacles around the vehicle terminal.

In order to avoid that parking data occupies too much internal memory of the cloud terminal, and in order to improve the running speed of the cloud terminal, in an embodiment, a predetermined storage quantity of different parking data is set in advance. The different parking data indicates different parking routes and/or different parking spaces. When a quantity of the collected different parking data is greater than the predetermined storage quantity, the latest different parking data conforming to the predetermined storage quantity is retained. The different parking data may include the same parking space and different parking routes, or different parking spaces and different parking routes. The larger the predetermined storage quantity is, the more parking data the cloud terminal can collect and store. The smaller the predetermined storage quantity is, the smaller the storage space of the cloud terminal occupied by the parking data, thereby saving the internal memory of the cloud terminal and reducing the processing load of the cloud terminal to allow the cloud terminal to run faster. In an embodiment, the predetermined storage quantity may be the predetermined number of parkings for collecting the different parking data. In an embodiment, the predetermined storage quantity may be the parking data of 5 to 10 parkings as preset, for example, the parking data of 5, 8, or 10 parkings. When at least two parkings have different parking data collected, for example, two parkings have different parking data collected, 2 quotas of the predetermined storage quantity are occupied. When the collected parking data is partially identical, the identical parking data accumulatively occupies one quota of the predetermined storage quantity.

In order to avoid storing redundant data in the cloud terminal, when the quantity of the collected different parking data is greater than the predetermined storage quantity, the latest different parking data conforming to the predetermined storage quantity is retained. It can be understood that the latest different parking data is the different parking data collected at the most recent time, and the different parking data collected at the historical time is deleted. For example, when the predetermined storage quantity of different parking data is five, and when the cloud terminal has already collected and stored the different parking data of five successive parkings, the latest collected parking data is different from the parking data of the five parkings stored in the cloud terminal, the latest collected parking data can be regarded as the different parking data of the sixth parking. If the cloud terminal directly stores the different parking data of the sixth parking, the quantity of different parking data stored in the cloud terminal is six, which is greater than the predetermined storage quantity, five. In this case, the different parking data of the six parking are sorted according to a chronological order, and the earliest collected different parking data can be replaced and overwritten by the different parking data of the sixth parking. In this way, the different parking data successively collected and stored in the cloud terminal can be kept within the predetermined storage quantity, thereby avoiding storing redundant data to occupy the internal memory of the cloud terminal, and updating the parking data in the cloud terminal. By analogy, in an embodiment, if the latest parking data collected by the cloud terminal continues to be different from the historically collected and stored parking data, the latest parking data will continue to be used to overwrite the earliest parking data.

In step S320, in response to the parking data collected by the cloud terminal being different, the cloud terminal continuously collects new parking data from the vehicle terminal.

In order to ensure the safety and reliability of the to-be-confirmed parking map used for memory parking, comparison verification and data perfection cannot be done based on one to-be-confirmed parking map, that is, the to-be-confirmed parking map cannot be directly built with the parking data of only one parking. Therefore, when the parking data of at least two parkings collected by the cloud terminal is mutually different, i.e., for the parking data of any two parkings, the parking data of one parking is different from the parking data of another parking, the cloud terminal will continue to collect new parking data from the vehicle terminal. The latest collected parking data is compared with the parking data collected historically in the cloud terminal to confirm whether the identical parking data can be obtained. If the newly collected parking data is still different from the existing parking data, the cloud terminal continues to collect new parking data.

In step S330, for the at least two parkings having the identical parking data, a maturity of the parking data is calculated based on a predetermined maturity determination condition; and the to-be-confirmed parking map is generated when the maturity of the identical parking data reaches a predetermined maturity value.

In an embodiment, once the parking data of at least two parkings is identical among the parking data collected in the cloud terminal, it is possible to stop the collecting of the new parking data from the vehicle terminal, or to further collect new parking data from the vehicle terminal so as to obtain more identical parking data for data perfection of the to-be-confirmed parking map.

Further, in an embodiment, in order to determine validity of the parking data and improve reliability of the built to-be-confirmed parking map, the maturity of the parking data is calculated based on the predetermined maturity determination condition. By calculating the maturity of identical parking data based on the predetermined maturity determination condition, among the identical parking data of at least two parkings, the parking data having the maturity conforming to the predetermined maturity value is used to build a more reliable to-be-confirmed parking map. Alternatively, the identical parking data of multiple parkings conforming to the predetermined maturity value is combined to jointly build the to-be-confirmed parking map.

In order to reasonably calculate the maturity of the parking data, in an embodiment, the predetermined maturity determination condition is set according to a parking behavior and/or a user behavior. The parking behavior refers to the behavior of driving along the parking route to the parking space for parking. In other words, one complete parking behavior includes one parking route and one corresponding parking space. The user behavior refers to the behavior of selecting the parking confirmation information by the user or the behavior of selecting by the user to confirm that the to-be-confirmed parking map is incorrect. In an embodiment, the maturity determination condition provides predetermined scores corresponding to different parking behaviors and user behaviors. The predetermined scores may be positive or negative numbers, and different behaviors have corresponding predetermined scores. By referring to the maturity determination condition, the maturity of the parking data can be scored, the scores obtained are added up, and the sum of the scores is the final maturity of the parking data. The sum of the scores is used to reflect the maturity of the parking data. The greater the sum of the scores, the more mature the parking data. The maturity of the parking data reaching the predetermined maturity value indicates that the parking data meets the mapping requirements, and the parking data can be used to generate the to-be-confirmed parking map, thereby improving the reliability of the to-be-confirmed parking map. The to-be-confirmed parking map is generated based on the identical parking data of at least two parkings. In an embodiment, the sum of the maturity scores of the parking data of respective parkings is a maturity score corresponding to the to-be-confirmed parking map. In other words, the to-be-confirmed parking map also has the corresponding maturity. When more than one to-be-confirmed parking maps are generated by the cloud terminal, the respective to-be-confirmed parking maps can be sorted in accordance with maturity scores thereof, so as to perform the subsequent step S340.

For the same vehicle parking in the same parking lot, each parking behavior corresponds to one set of parking data, including one parking route and one parking space. In an embodiment, the predetermined maturity determination condition may be as follows. (1) The parking data of first parking is collected in the cloud terminal, that is, when the vehicle is parked in the parking lot for the first time, the generated parking data of the first parking has a corresponding score, and the maturity score is increased by 1. (2) If the parking route and parking space corresponding to the parking data are subsequently repeatedly executed by the vehicle, the maturity of the parking data is increased with each repeat execution, and the predetermined score corresponding to the maturity is increased by 1 after each repeated execution. (3) When the vehicle generates new parking data, i.e., the new parking data different from the parking data collected historically in the cloud terminal, for example, when parking into a new parking space or driving along a new parking route, then the predetermined score corresponding to the maturity of the new parking data is increased by 1, and the predetermined score corresponding to the maturity of the historical parking data is a half of the sum of maturity scores accumulated heretofore. (4) For the parking data that has been confirmed actively by the user, for example, when the user selects the parking confirmation information in step S360, the predetermined score corresponding to the maturity of the parking data is increased by 16. The numerical setting of the predetermined scores mentioned above is merely exemplary for reference, but is not limited herein. (5) For the behavior of the user actively selecting to confirm that the to-be-confirmed parking map is incorrect, the predetermined score is deducted with respect to the corresponding parking data. In an embodiment, as the score corresponding to the parking data changes, the score of the maturity of the to-be-confirmed parking map that has been generated is also adjusted accordingly. Further, in order to increase the speed of maturity comparison, the maturity of the to-be-confirmed parking map is rounded up or down to an integer, so that the maturity corresponding to the parking data is an integer, further facilitating the comparison. For example, when the vehicle terminal fails to enter the parking space, the maturity before halving is 7, the maturity after halving is 3.5, and the maturity after halving can be rounded up to 4 or down to 3.

In an embodiment, the predetermined maturity value is greater than 1, when the final maturity of the parking data is greater than 1, the parking data can be used to generate a to-be-confirmed parking map. The maturity of the parking data is calculated by setting the maturity determination condition, the maturity is a measure for determining whether the parking data is suitable for building a to-be-conformed map. The higher maturity of the parking data means that in the historical parking behaviors, the vehicle has performed multiple times of parking based on the parking data, and the parking data has a higher utilization rate and is more mature and more suitable for building a to-be-confirmed parking map. In this way, the parking data suitable for building the to-be-confirmed parking map can be screen out from the parking data by means of the predetermined maturity value, which avoids generating too many to-be-confirmed parking maps from the parking data having the unsatisfying maturity, thereby alleviating the burden of mapping of the cloud terminal, and avoiding generating redundant to-be-confirmed parking maps.

In order to flexibly set the predetermined maturity value, in an embodiment, the predetermined maturity value may be a constant value or a fluctuating value. For example, the predetermined maturity value may fluctuate according to the number of parkings for obtaining parking data, an average maturity of the parking data, and the number of parking data comparisons between the parking data of one single to-be-confirmed parking map and the current parking data of the vehicle terminal. For example, the predetermined maturity value may be an average value of the maturity of the parking data. In this case, the predetermined maturity value varies according to the maturity of the updated and changing parking data under the predetermined storage quantity. When the parking data is collected from more times of parking, the quantity of parking data reaching the predetermined maturity value may be greater. Therefore, the predetermined maturity value can be increased, in order to avoid generating too many to-be-confirmed parking maps and to increase the generation speed of the to-be-confirmed parking map. When the maturity of the parking data is generally high, for example, higher than an average value of original predetermined maturity value, the original predetermined maturity value can be increased, and fluctuate to generate a new predetermined maturity value, thereby improving the standard for generating the to-be-confirmed parking map and controlling the number of the generated to-be-confirmed parking maps. The large number of comparisons between the parking data of the to-be-confirmed parking map and the current parking data of the vehicle terminal indicates that, by transmitting the corresponding to-be-confirmed parking map having insufficient maturity to the vehicle terminal, the predetermined maturity value can be increased to avoid generating redundant to-be-confirmed parking maps.

In order to reduce the calculation amount in the cloud terminal, in an embodiment, the number of different parking spaces for parking is preset. The number of different parking spaces is the number of different parking spaces for the same vehicle in the same parking lot. It is understandable that if the cloud terminal continues to collect parking data, the respective parking spaces of parking data are compared with each other without considering the parking routes. If the number of different parking spaces for parking is greater than a predetermined number, the cloud terminal keeps the parking data of the latest different parking spaces that meet the predetermined number, i.e., clears the parking data including the historical parking space in the cloud terminal by overwriting or deleting, thereby reducing the redundant data in the cloud terminal and reducing the maturity calculation amount in the cloud terminal, and increasing the processing efficiency. In an embodiment, the predetermined number of different parking spaces may be from 3 to 8, for example, 3, 5, or 8.

In an embodiment, when the maturity of the parking data does not reach the predetermined maturity value, even if the identical parking data of at least two parkings has been collected, the parking data is still unsuitable for generating a to-be-confirmed parking map. In order to ensure the reliability of the to-be-confirmed parking map, it is necessary to re-collect the parking data, i.e., performing step S310 once again, until at least two parkings have the identical collected parking data and the identical parking data reaches the predetermined maturity value, and then the corresponding to-be-confirmed parking map is generated.

It should be understood that the above-mentioned step S320 and step S330 respectively correspond to different situations of the parking data. Therefore, after performing step S310, step S320 or step S330 is selected to be performed in accordance with the actual situation of the parking data collected in the cloud terminal.

In step S340, when more than one to-be-confirmed parking maps are built, the cloud terminal transmit the to-be-confirmed parking map conforming to a predetermined transmission condition to the vehicle terminal.

It is understandable that the predetermined maturity determination condition set different predetermined scores for different behaviors. As the cloud terminal continues to collect parking data, new parking data may affect the maturity score of the historical parking data stored in the cloud terminal. That is, the maturity score of parking data collected in the cloud terminal is not constant but variable. Correspondingly, the maturity of the generated to-be-confirmed parking map will also change with the change of the maturity of the parking data. In an embodiment, at least one to-be-confirmed parking map may be generated based on the parking data with maturity meeting the predetermined maturity value. In an embodiment, the predetermined transmission condition may be the to-be-confirmed parking map with the highest maturity value. In an embodiment, when more than one to-be-confirmed parking maps are built, the cloud terminal transmits the to-be-confirmed parking map with the highest maturity to the vehicle terminal.

Further, more than one to-be-confirmed parking maps may be built, but when performing one memory parking, the vehicle terminal generally needs to conduct the parking based on one definite to-be-confirmed parking map. Too many to-be-confirmed parking maps may interfere with the judgment of the vehicle terminal. In order to avoid interfering with the vehicle terminal, the to-be-confirmed parking map with the highest maturity in the cloud terminal is transmitted to the vehicle terminal. In an embodiment, when more than one to-be-confirmed parking maps are built, the to-be-confirmed parking maps are ranked in accordance with the maturity score, and the corresponding to-be-confirmed parking map is transmitted to the vehicle terminal according to the ranking. Furthermore, the maturity of the to-be-confirmed parking map is variable. That is, the cloud terminal updates the maturity of the to-be-confirmed parking map based on the historical parking behaviors of the vehicle terminal and the user behaviors. Correspondingly, the ranking of the maturity scores of the respective to-be-confirmed parking maps stored in the cloud terminal may also change. In an embodiment, after the ranking of the maturity of the to-be-confirmed parking maps changes, the cloud terminal transmits the to-be-confirmed map with the highest maturity to the vehicle terminal according to the latest ranking in real time, so that the vehicle terminal can conduct memory parking based on the to-be-confirmed parking map with the latest highest maturity. With this design, the cloud terminal automatically updates the maturity of the to-be-confirmed parking map, and sends the to-be-confirmed map with the highest maturity according to a latest ranking to the vehicle terminal, so that the vehicle terminal can conduct the memory parking based on the to-be-confirmed parking map with the latest highest maturity, without requiring the user to participate in the update of the to-be-confirmed parking map at the vehicle terminal, thereby improving the user experience.

In step S350, the vehicle terminal receives the to-be-confirmed parking map, and the vehicle terminal performs parking data comparison between the to-be-confirmed parking map with the current parking data until the to-be-confirmed parking map passes the parking data comparison.

During the parking data comparison, the vehicle terminal reads the to-be-confirmed parking map and activates a relevant positioning algorithm. In an embodiment, the vehicle terminal performs parking data comparison in the background autonomously and silently, without user's participation and supervision. The vehicle terminal conducts parking based on the current parking data, and the current parking data includes the current parking route along which the user drives and the current parking space for parking. The parking data comparison includes that the vehicle terminal compares the parking route in the to-be-confirmed parking map with the current parking route in accordance with the positioning algorithm, and the vehicle terminal compares the parking space in the to-be-confirmed parking map with the current parking space in accordance with the positioning algorithm. When both the parking route and the parking space of the to-be-confirmed parking map are the same as those in the current parking data, it passes the parking data comparison. On the contrary, when the parking route and/or the parking space are/is different from that of the current parking data, it fails to pass the parking data comparison.

In an embodiment, when the current parking data of the vehicle terminal is different from the parking data of the to-be-confirmed parking map, the parking data of the to-be-confirmed parking map is compared with parking data of the next parking of the vehicle terminal. When the number of parking data comparisons exceeds the predetermined number of comparisons, the maturity of the corresponding to-be-confirmed parking map is adjusted.

Further, if the current parking data of the vehicle terminal is different from the parking data of the to-be-confirmed parking map, it fails to pass the parking data comparison. In other words, it indicates that the parking data in the to-be-confirmed parking map is inconsistent with the current parking route and/or parking space of the user. The reason for the inconsistency may be in that the user has temporarily changed the parking behavior, and a parking route and/or a parking space that are different from the historical parking behavior appear, and the user's next parking may be restored to be the same as the historical parking behavior. Therefore, the confirmation can be conducted again by comparing the parking data of the to-be-confirmed parking map with the parking data of the next parking of the vehicle terminal. If the parking data of the to-be-confirmed parking map and the parking data of the next parking of the vehicle terminal still fail to pass the parking data comparison, a next parking data comparison will continue to be executed. When the number of the parking data comparisons exceeds the predetermined number of comparisons, it indicates that the new parking behavior of the user indeed happened, e.g., adopting a new parking route and/or a new parking space, the parking data of to-be-confirmed parking map received by the vehicle terminal is inconsistent with the user's new parking behavior, i.e., the to-be-confirmed parking map may not be applicable. Then, the cloud terminal adjusts the maturity of the corresponding to-be-confirmed parking map. In an embodiment, the predetermined number of comparisons for one same to-be-confirmed parking map may be 2 to 5. By setting the predetermined number of comparisons, it is avoided to affect the map confirmation progress by excessively frequently comparing the same to-be-confirmed parking map.

Further, after the number of the parking data comparisons exceeds the predetermined number of comparison times, the cloud terminal adjusts the maturity of the corresponding to-be-confirmed parking map. In an embodiment, the cloud terminal receives the information that the to-be-confirmed parking map transmitted from the vehicle terminal fails to pass the parking data comparison, and the corresponding predetermined score is deduced every time when failing to pass the parking data comparison. It can be understood that, as the maturity score of the to-be-confirmed parking map changes, the ranking of the maturity of respective to-be-confirmed parking maps in the cloud terminal may change, so as to change the to-be-confirmed parking map that meets the predetermined transmission condition. For example, when the to-be-confirmed parking map with the highest maturity is changed, step S340 is performed once again. That is, the cloud terminal re-transmits the latest to-be-confirmed parking map meeting the predetermined transmission condition to the vehicle terminal, and the vehicle terminal performs step S350 once again. That is, the vehicle terminal compares the newly received to-be-confirmed parking map with the new current parking data executed by the user until the parking data comparison is passed, and then the subsequent step S360 is performed. Otherwise, step S340 and step S350 are executed recurrently. With this design, after the to-be-confirmed parking map is transmitted to the vehicle terminal from the cloud terminal, it is sufficient to demonstrate that the to-be-confirmed parking map conforms to the user's actual parking behavior and the to-be-confirmed parking map is suitable for use in memory parking only when the to-be-confirmed parking map passes the parking data comparison.

In step S360, in response to the to-be-confirmed parking map passing the parking data comparison, an interactive confirmation interface is displayed in a pop-up window of the vehicle terminal for the user to select parking confirmation information, and the parking confirmation information is transmitted to the cloud terminal.

In an embodiment, when the current parking data of the vehicle terminal is the same as the parking data of the to-be-confirmed parking map, the cloud terminal transmits a predetermined interactive confirmation interface to the vehicle terminal, then the pop-up window of the vehicle terminal displays the interactive confirmation interface, and the cloud terminal receives the parking confirmation information selected by the user on the interactive confirmation interface. It is understandable that, the to-be-confirmed parking map passing the parking data comparison means that the current parking data of the vehicle terminal is the same as the parking data of the to-be-confirmed parking map, i.e., the parking route of the to-be-confirmed parking map is the same as the current driving route of the vehicle terminal, the parking space of the to-be-confirmed parking map is the same as the current parking space of the vehicle terminal, and the to-be-confirmed parking map conforms to the user's current parking behavior. Further, in order to ensure that the to-be-confirmed parking map conforms to the user's usual parking behavior, the user is required to confirm the to-be-confirmed parking map through the interactive confirmation interface. In this embodiment, the cloud terminal transmits the predetermined interactive confirmation interface to the vehicle terminal, and the vehicle terminal can display the interactive confirmation interface to the user through the pop-up window. In an embodiment, the interactive confirmation interface may show the user a to-be-confirmed parking map that is the same as the current parking data of the vehicle terminal, so that the user can understand the parking route and parking space included in the to-be-confirmed parking map. On this basis, the interactive confirmation interface can also provide selectable parking confirmation information, allowing the user to autonomously select the parking confirmation information. If the user selects the parking confirmation information, it means that the to-be-confirmed parking map conforms to the actual parking scenario and user's parking habits, and after the parking confirmation information is transmitted to the cloud terminal, the cloud terminal can confirm that the building of to-be-confirmed parking map is completed, the parking map is formed and can be used as a map basis for the vehicle to perform memory parking. In this way, the automatic memory parking of the vehicle terminal can be officially activated. When the user conducts the next parking, the vehicle can automatically perform a memory parking in accordance with the to-be-confirmed parking map that has been confirmed, without requiring the user to manually park the vehicle.

Further, in an embodiment, after the user autonomously selects the parking confirmation information, the interactive confirmation interface further includes an option of whether to start memory parking. When the user selects the parking confirmation information, the confirmation information represents that the to-be-confirmed parking map is correct. However, in order to meet the various demands of the user, the interactive confirmation interface can further provide the user with an option to confirm whether to start memory parking when the user tends to park the vehicle terminal manually instead of starting the memory parking. If the user chooses not to start the memory parking, the vehicle terminal stores the to-be-confirmed parking map, and the cloud terminal no longer collects new parking data for the same vehicle terminal. Until the next time when the user actively chooses to start the memory parking, the to-be-confirmed parking map is used for memory parking.

In an embodiment, the interactive confirmation interface further includes an option to confirm that the to-be-confirmed parking map is incorrect. In this case, the user selects the option that the to-be-confirmed parking map is incorrect, and the vehicle terminal sends to the cloud terminal the corresponding feedback information that the to-be-confirmed parking map is incorrect. When the to-be-confirmed parking map is incorrect, the cloud terminal re-score the maturity score of the to-be-confirmed parking map, so as to change the ranking of the maturity of the to-be-confirmed parking maps stored in the cloud terminal, and the cloud terminal re-transmits the to-be-confirmed parking map with the latest highest maturity to the vehicle terminal, and the above steps S340 to S360 are repeated until the user selects the parking confirmation information.

From the above steps S310 to S360, it can be seen that the user is only required to make the final confirmation in the final step S360 to determine the parking map to be used for the actual memory parking. Instead of that the user is required to personally participate in or supervise the mapping before this step, the cloud terminal and the vehicle terminal operate autonomously and silently, thereby improving the user experience. Such a design can ultimately obtain and store the parking map applicable for memory parking, without requiring the user's participation and supervision.

In summary, in the mapping method of the parking map illustrated in the embodiments of the present disclosure, the cloud terminal collects parking data of at least two parkings from the vehicle terminal, if the at least parkings have different parking data, the cloud terminal continues to collect new parking data until at least two parkings of the accumulated parkings have the identical parking data, then the maturity of the parking data is determined based on the predetermined maturity determination condition, and the maturity of the parking data is adjusted simply and clearly by means of scoring. When the maturity of the parking data reaches the predetermined maturity value, the parking map is generated based on the corresponding parking data. When more than one parking maps are generated by the cloud terminal, the cloud terminal transmits the parking map with the highest maturity to the vehicle terminal. The vehicle terminal compares the parking data of the received parking map with the current parking data, so as to determining whether the parking map conforms to the user's real parking behavior through the on-site parking data comparison. If the parking data comparison at the vehicle terminal is passed, the interactive confirmation interface is displayed in a pop-up window for the user to select the parking confirmation information. With the user confirm that the parking map is correct and applicable, the parking map is finally built, and the cloud terminal can stop the collection operation based on the confirmation information, in order to reduce the operating load. The mapping method of the present disclosure only requires the user's action of making a final confirmation instead of the participation and supervision in the whole process, thereby reducing the tension caused by abnormality occurring the mapping process. Without requiring the user's assistance, the workload for the user is reduced, and only the cloud terminal and the vehicle terminal are required to automatically and silently complete the process, thereby improving the mapping efficiency.

Corresponding to the foregoing embodiments of the application function implementation method, the present disclosure also provides a mapping device, a generation device, and a mapping system of a parking map, and corresponding embodiments.

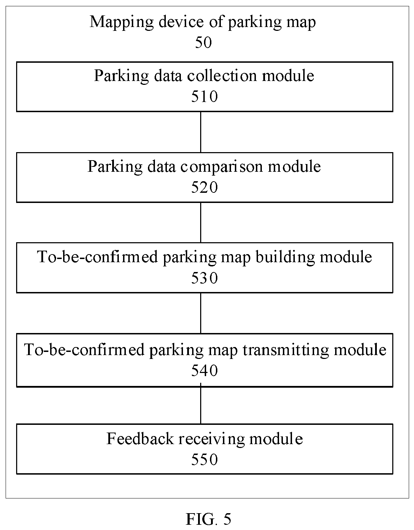

Referring to FIG. 5, an embodiment of the present disclosure further provides a mapping device 50 of a parking map, including: a parking data collection module 510 configured to collect parking data of at least two parkings from a vehicle terminal, the parking data indicating a parking route and a parking space; a parking data comparison module 520 configured to perform comparison among the collected parking data; a to-be-confirmed parking map building module 530 configured to build, for at least two parkings having identical parking data, a to-be-confirmed parking map corresponding to the identical parking data; a to-be-confirmed parking map transmitting module 540 configured to transmit the to-be-confirmed parking map to the vehicle terminal for parking data comparison with current parking data; and a feedback receiving module 550 configured to receive feedback information generated by the vehicle terminal based on a result of the parking data comparison.

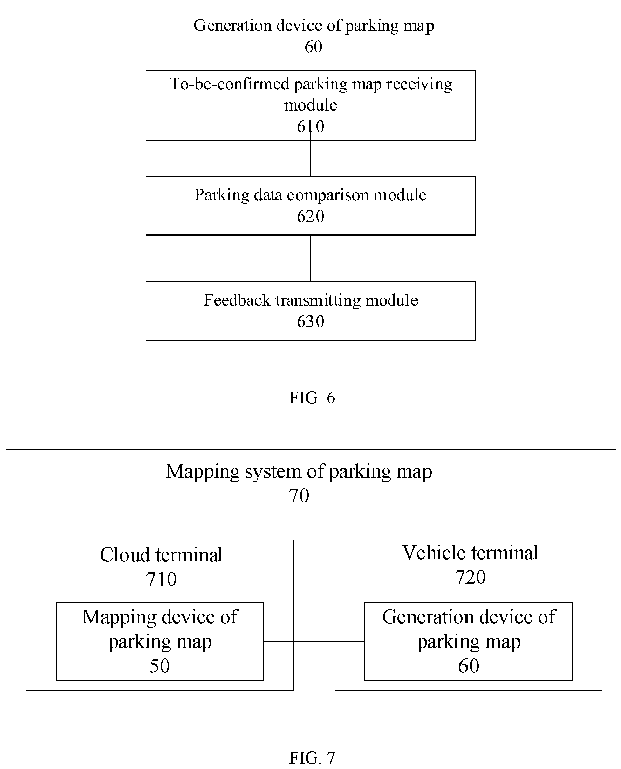

Referring to FIG. 6, an embodiment of the present disclosure further provides a parking map generation device 60, including: a to-be-confirmed parking map receiving module 610 configured to receive a to-be-confirmed parking map, where the to-be-confirmed parking map is generated based identical parking data of at least two parkings collected by a cloud terminal, and parking data of each parking indicates a parking route and a parking space; a parking data comparison module 620 configured to compare the to-be-confirmed parking map with current parking data to generate a corresponding parking data comparison result; and a feedback transmitting module 630 configured to transmit feedback information generated based on the result of the parking data comparison to the cloud terminal.

Referring to FIG. 7, an embodiment of the present disclosure further provides a mapping system 70 of a parking map, including a cloud terminal 710 and a vehicle terminal 720.

The cloud terminal 710 is configured to: collect parking data of at least two parkings from a vehicle terminal, the parking data indicating a parking route and a parking space; perform comparison among the collected parking data; build, for at least two parkings having identical parking data, a to-be-confirmed parking map corresponding to the identical parking data; transmit the to-be-confirmed parking map to the vehicle terminal for parking data comparison with current parking data; and receive feedback information generated by the vehicle terminal based on a result of the parking data comparison, and confirm or adjust the to-be-confirmed parking map in accordance with the feedback information.

The vehicle terminal 720 is configured to: receive the to-be-confirmed parking map transmitted from the cloud terminal 710, perform parking data comparison between the to-be-confirmed parking map and the current parking data to generate a corresponding parking data comparison result, and transmit feedback information generated based on the result of the parking data comparison to the cloud terminal..

Further, referring to FIG. 5 to FIG. 7 together, the cloud terminal 710 may include the mapping device 50 of the parking map, and the vehicle terminal 720 may include the generation device 60 of the parking map. The mapping system 70 of the present disclosure can realize automatic and silent mapping without requiring the user's participation and supervision, thereby improving the mapping efficiency and the user experience.

The specific manners for performing operations of respective modules in the device and system of the above embodiments have been described in detail in the embodiments involving the method, which will not be repeatedly described in detail herein.

An embodiment of the present disclosure further provides an electronic device, which includes a memory and a processor.

The processor can be a central processing unit (CPU), or other general-purpose processors, digital signal processors (DSP), application specific integrated circuits (ASIC), field-programmable gate array (FPGA), or other programmable logic devices, discrete gate or transistor logic devices, discrete hardware components, etc. The general-purpose processor may be a microprocessor or any conventional processor or the like.

The memory may include various types of storage units, such as system memory, read-only memory (ROM), and a permanent storage device. Among them, the ROM can store static data or instructions required by the processor or other modules of the computer. The permanent storage device may be a read-write storage device. The permanent storage device may be a non-volatile storage device that does not lose the stored instructions and data even after the computer is powered off. In some embodiments, the permanent storage device adopts a large-capacity storage device (such as a magnetic or optical disk, flash memory). In other embodiments, the permanent storage device may be an erasable storage device (for example, a floppy disk, an optical drive). The system memory can be a read-write storage device or a volatile read-write storage device, such as dynamic random access memory. The system memory can store some or all of the instructions and data to be executed by the processor during running. In addition, the memory may include any combination of computer-readable storage media, including various types of semiconductor memory chips (DRAM, SRAM, SDRAM, flash memory, programmable read-only memory), and magnetic disks and/or optical disks may also be used. In some embodiments, the memory may include erasable storage devices that can be read and/or written, such as compact disk (CD), read-only digital versatile discs (e.g., DVD-ROM, dual-layer DVD-ROM), read-only blue-ray discs, ultra-density discs, flash memory cards (such as SD cards, min SD cards, Micro-SD cards, etc.), magnetic floppy disks, etc. The computer-readable storage medium does not include carrier waves or instantaneous electronic signals that are transmitted wirelessly or via wire.

The memory has executable codes stored thereon. The executable codes, when executed by the processor, cause the processor to implement part or all of the steps of the above-mentioned method.

In addition, the method according to the present disclosure can also be implemented as a computer program or computer program product, and the computer program or computer program product includes computer program code instructions for executing part or all of the steps in the above-mentioned method of the present disclosure.

Alternatively, the present disclosure can also be implemented as a computer-readable storage medium (or machine-readable storage medium) having executable codes (or a computer program, or a computer instruction code) stored thereon. The executable codes (or the computer program, or the computer instruction code), when executed by the processor of the electronic device (or a server, etc.), cause the processor to implement part or all of the steps of the above-mentioned method according to the present disclosure.

## Claims

1. A mapping method of a parking map, comprising:
collecting parking data of at least two parkings from a vehicle terminal, the parking data indicating a parking route and a parking space, wherein the parking data of at least two parkings is parking data respectively collected from the same vehicle terminal in different time periods;
performing comparison among the collected parking data from the same vehicle terminal;
generating, for at least two parkings having identical parking data from the same vehicle terminal, a to-be-confirmed parking map corresponding to the identical parking data;
transmitting the to-be-confirmed parking map to the vehicle terminal for parking data comparison with current parking data, which comprises a current parking route along which the vehicle terminal currently runs and a current parking space where the vehicle terminal parks, when a parking route of the to-be-confirmed parking map is the same as the current parking route of the vehicle terminal, and
a parking space of the to-be-confirmed parking map is the same as the current parking space of the vehicle terminal, and the to-be-confirmed parking map conforms to user's current parking behavior; and
when the parking data of the to-be-confirmed parking map is the same as the current parking data of the vehicle terminal, receiving parking confirmation information of the vehicle terminal about the to-be-confirmed parking map, and confirming the to-be-confirmed parking map in accordance with the parking confirmation information;
wherein said generating, for at least two parkings having identical parking data, a to-be-confirmed parking map corresponding to the identical parking data comprises:
determining, for the at least two parkings having the identical parking data, a maturity of the identical parking data based on a predetermined maturity determination condition; and
generating the to-be-confirmed parking map when the maturity of the identical parking data reaches a predetermined maturity value,
wherein the predetermined maturity determination condition is set according to a parking behavior, which includes one parking route and one corresponding parking space, and a user behavior, which refers to the behavior of selecting the parking confirmation information by the user or the behavior of selecting by the user to confirm that the to-be-confirmed parking map is incorrect, and
the maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

2. The mapping method of the parking map according to claim 1, further comprising:
collecting new parking data from the vehicle terminal in response to the collected parking data being different from each other.

3. The mapping method of the parking map according to claim 1, further comprising:
pre-setting a predetermined storage quantity of different parking data indicating different parking routes and/or different parking spaces; and
retaining latest different parking data conforming to the predetermined storage quantity, when a quantity of the collected different parking data is greater than the predetermined storage quantity.

4. The mapping method of the parking map according to claim 1, wherein said transmitting the to-be-confirmed parking map to the vehicle terminal for parking data comparison with current parking data comprises:
transmitting, to the vehicle terminal, a to-be-confirmed parking map conforming to a predetermined transmission condition, when more than one to-be-confirmed parking maps are generated.

5. A generation method of a parking map, comprising:
receiving a to-be-confirmed parking map, wherein the to-be-confirmed parking map is generated based on identical parking data of at least two parkings collected by a cloud terminal, and parking data of each parking indicating a parking route and a parking space;
comparing the to-be-confirmed parking map with current parking data to generate a corresponding parking data comparison result, wherein the current parking data comprises a current parking route along which a vehicle terminal currently runs and a current parking space where the vehicle terminal parks; and
transmitting feedback information generated based on the parking data comparison result to the cloud terminal when a parking route of the to-be-confirmed parking map is the same as the current parking route of the vehicle terminal, and
a parking space of the to-be-confirmed parking map is the same as the current parking space of the vehicle terminal, and the to-be-confirmed parking map conforms to user's current parking behavior, wherein the feedback information is used for the cloud terminal to confirm the to-be-confirmed parking map,
wherein for the at least two parkings having the identical parking data, a maturity of the identical parking data is determined based on a predetermined maturity determination condition, and
wherein the to-be-confirmed parking map is generated when the maturity of the identical parking data reaches a predetermined maturity value,
wherein the predetermined maturity determination condition is set according to a parking behavior, which includes one parking route and one corresponding parking space, and a user behavior, which refers to the behavior of selecting the parking confirmation information by the user or the behavior of selecting by the user to confirm that the to-be-confirmed parking map is incorrect, and
the maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

6. The generation method of the parking map according to claim 5, wherein said transmitting feedback information generated based on the result of the parking data comparison to the cloud terminal comprises:
displaying an interactive confirmation interface, when parking data of the to-be-confirmed parking map is identical with the current parking data of the vehicle terminal; and
transmitting to the cloud terminal the feedback information generated by a user on the interactive confirmation interface.

7. A mapping device (50) of a parking map, comprising:
a parking data collection module (510) configured to collect parking data of at least two parkings from a vehicle terminal, the parking data indicating a parking route and a parking space, wherein the parking data of at least two parkings is parking data respectively collected from the same vehicle terminal in different time periods;
a parking data comparison module (520) configured to perform comparison among the collected parking data from the same vehicle terminal;
a to-be-confirmed parking map generation module (530) configured to generate, for at least two parkings having identical parking data from the same vehicle terminal, a to-be-confirmed parking map corresponding to the identical parking data;
a to-be-confirmed parking map transmitting module (540) configured to transmit the to-be-confirmed parking map to the vehicle terminal for parking data comparison with current parking data, which comprises a current parking route along which a vehicle terminal currently runs and a current parking space where the vehicle terminal parks, when a parking route of the to-be-confirmed parking map is the same as the current parking route of the vehicle terminal, and
a parking space of the to-be-confirmed parking map is the same as the current parking space of the vehicle terminal, and the to-be-confirmed parking map conforms to user's current parking behavior; and
a feedback receiving module (550) configured to:
receive parking confirmation information of the vehicle terminal about the to-be-confirmed parking map and confirm the to-be-confirmed parking map in accordance with the parking confirmation information, when the parking data of the to-be-confirmed parking map is the same as the current parking data of the vehicle terminal;
wherein the to-be-confirmed parking map generation module (530) is further configured to:
determine, for the at least two parkings having the identical parking data, a maturity of the identical parking data based on a predetermined maturity determination condition; and
generate the to-be-confirmed parking map when the maturity of the identical parking data reaches a predetermined maturity value,
wherein the predetermined maturity determination condition is set according to a parking behavior, which includes one parking route and one corresponding parking space, and a user behavior, which refers to the behavior of selecting the parking confirmation information by the user or the behavior of selecting by the user to confirm that the to-be-confirmed parking map is incorrect, and
the maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

8. A generation device (60) of a parking map, comprising:
a to-be-confirmed parking map receiving module (610) configured to receive a to-be-confirmed parking map, wherein the to-be-confirmed parking map is generated based identical parking data of at least two parkings collected by a cloud terminal, and parking data of each parking indicating a parking route and a parking space;
a parking data comparison module (620) configured to compare the to-be-confirmed parking map with current parking data to generate a corresponding parking data comparison result, wherein the current parking data comprises a current parking route along which a vehicle terminal currently runs and a current parking space where the vehicle terminal parks; and
a feedback transmitting module (630) configured to transmit feedback information generated based on the result of the parking data comparison to the cloud terminal when a parking route of the to-be-confirmed parking map is the same as the current parking route of the vehicle terminal, and
a parking space of the to-be-confirmed parking map is the same as the current parking space of the vehicle terminal, and the to-be-confirmed parking map conforms to user's current parking behavior,
wherein for the at least two parkings having the identical parking data, a maturity of the identical parking data is determined based on a predetermined maturity determination condition, and
wherein the to-be-confirmed parking map is generated when the maturity of the identical parking data reaches a predetermined maturity value,
wherein the predetermined maturity determination condition is set according to a parking behavior, which includes one parking route and one corresponding parking space, and a user behavior, which refers to the behavior of selecting the parking confirmation information by the user or the behavior of selecting by the user to confirm that the to-be-confirmed parking map is incorrect, and
the maturity determination condition is used to provide predetermined scores corresponding to different parking behaviors and user behaviors, and by referring to the maturity determination condition, the maturity of the identical parking data is scored, the obtained scores are added up, and a sum of the scores is the final maturity of the parking data, wherein the sum of the scores is used to reflect the maturity of the identical parking data.

9. The generation device (60) of the parking map according to claim 8, wherein the feedback transmitting module (630) is further configured to:
display an interactive confirmation interface, when parking data of the to-be-confirmed parking map is identical with the current parking data of the vehicle terminal; and
transmit to the cloud terminal the feedback information generated by a user on the interactive confirmation interface.

10. A mapping system (70) of a parking map, comprising:
a cloud terminal (710) comprising the mapping device (50) according to claim 7; and
a vehicle terminal (720) comprising the generation device (60) according to claim 8.

11. A vehicle, comprising the generation device (60) of a parking map according to claim 8 or 9.

12. An electronic device, comprising a processor and a memory having executable codes stored thereon, the executable codes, when executed by the processor, cause the processor to implement the method according to any of claims 1 to 6.

13. A computer-readable storage medium, having executable codes stored thereon, the executable codes, when executed by a processor, cause the processor to implement the method according to any of claims 1 to 6.

## Patentansprüche

1. Verfahren zur Kartierung einer Parkkarte, aufweisend:
Sammeln von Parkdaten von mindestens zwei Parkvorgängen von einem Fahrzeugterminal, wobei die Parkdaten eine Parkroute und einen Parkplatz anzeigen, wobei die Parkdaten von mindestens zwei Parkvorgängen Parkdaten sind, die jeweils von demselben Fahrzeugterminal in unterschiedlichen Zeiträumen gesammelt wurden;
Durchführen eines Vergleichs zwischen den gesammelten Parkdaten desselben Fahrzeugterminals;
Erzeugen, für mindestens zwei Parkvorgänge mit identischen Parkdaten von demselben Fahrzeugterminal, einer zu bestätigenden Parkkarte, die den identischen Parkdaten entspricht;
Übertragen der zu bestätigenden Parkkarte an das Fahrzeugterminal zum Parkdatenvergleich mit aktuellen Parkdaten, die eine aktuelle Parkroute, auf der das Fahrzeugterminal derzeit fährt, und einen aktuellen Parkplatz, an dem das Fahrzeugterminal parkt, aufweisen, wenn eine Parkroute der zu bestätigenden Parkkarte mit der aktuellen Parkroute des Fahrzeugterminals übereinstimmt und ein Parkplatz der zu bestätigenden Parkkarte mit dem aktuellen Parkplatz des Fahrzeugterminals übereinstimmt und die zu bestätigende Parkkarte mit dem aktuellen Parkverhalten des Benutzers übereinstimmt; und
wenn die Parkdaten der zu bestätigenden Parkkarte die gleichen sind wie die aktuellen Parkdaten des Fahrzeugterminals, Empfangen von Parkbestätigungsinformationen des Fahrzeugterminals in Bezug auf die zu bestätigende Parkkarte, und Bestätigen der zu bestätigenden Parkkarte in Übereinstimmung mit den Parkbestätigungsinformationen;
wobei das Erzeugen einer zu bestätigenden Parkkarte, die den identischen Parkdaten entspricht, für mindestens zwei Parkvorgänge mit identischen Parkdaten, aufweist:
Bestimmen einer Reife der identischen Parkdaten für die mindestens zwei Parkvorgänge mit den identischen Parkdaten auf der Grundlage einer vorbestimmten Reifebestimmungsbedingung; und
Erzeugen der zu bestätigenden Parkkarte, wenn die Reife der identischen Parkdaten einen vorgegebenen Reifewert erreicht,
wobei die vorbestimmte Reifebestimmungsbedingung entsprechend einem Parkverhalten, das eine Parkroute und einen entsprechenden Parkplatz umfasst, und einem Benutzerverhalten, das sich auf das Verhalten des Auswählens der Parkbestätigungsinformation durch den Benutzer oder das Verhalten des Auswählens durch den Benutzer zum Bestätigen, dass der zu bestätigende Parkkarte falsch ist, bezieht, festgelegt wird, und
wobei die Reifebestimmungsbedingung verwendet wird, um vorbestimmte Punktzahlen bereitzustellen, die verschiedenen Parkverhalten und Benutzerverhalten entsprechen, und durch Bezugnahme auf die Reifebestimmungsbedingung die Reife der identischen Parkdaten bewertet wird, die erhaltenen Punktzahlen addiert werden und eine Summe der Punktzahlen die endgültige Reife der Parkdaten ist, wobei die Summe der Punktzahlen verwendet wird, um die Reife der identischen Parkdaten wiederzugeben.

2. Verfahren zur Kartierung einer Parkkarte nach Anspruch 1 des Weiteren aufweisend:
Sammeln neuer Parkdaten vom Fahrzeugterminal als Reaktion darauf, dass sich die gesammelten Parkdaten voneinander unterscheiden.

3. Verfahren zur Kartierung einer Parkkarte nach Anspruch 1, des Weiteren aufweisend:
Voreinstellen einer vorbestimmten Speichermenge von unterschiedlichen Parkdaten, die unterschiedliche Parkrouten und/oder unterschiedliche Parkplätze anzeigen; und
Zurückhalten der letzten unterschiedlichen Parkdaten, die der vorbestimmten Speichermenge entsprechen, wenn eine Menge der gesammelten unterschiedlichen Parkdaten größer als die vorbestimmte Speichermenge ist.

4. Verfahren zur Kartierung einer Parkkarte nach Anspruch 1, wobei das Übertragen der zu bestätigenden Parkkarte an das Fahrzeugterminal zum Parkdatenvergleich mit aktuellen Parkdaten aufweist:
Übertragen einer zu bestätigenden Parkkarte an das Fahrzeugterminal, die einer vorgegebenen Übertragungsbedingung entspricht, wenn mehr als eine zu bestätigende Parkkarte erzeugt wird.

5. Verfahren zur Erzeugung einer Parkkarte, aufweisend:
Empfangen einer zu bestätigenden Parkkarte, wobei die zu bestätigende Parkkarte basierend auf identischen Parkdaten von mindestens zwei Parkvorgängen, die von einem Cloud-Terminal gesammelt wurden, und auf Parkdaten jedes Parkvorgangs, die eine Parkroute und einen Parkplatz angeben, erzeugt wird;
Vergleichen der zu bestätigenden Parkkarte mit aktuellen Parkdaten, um ein entsprechendes Parkdaten-Vergleichsergebnis zu erzeugen, wobei die aktuellen Parkdaten eine aktuelle Parkroute, entlang der ein Fahrzeugterminal derzeit fährt, und einen aktuellen Parkplatz, auf dem das Fahrzeugterminal parkt, aufweisen; und
Übertragen von Rückmeldeinformationen, die auf der Grundlage des Parkdaten-Vergleichsergebnisses erzeugt werden, an das Cloud-Terminal, wenn eine Parkroute der zu bestätigenden Parkkarte die gleiche ist wie die aktuelle Parkroute des Fahrzeugterminals, und ein Parkplatz der zu bestätigenden Parkkarte der gleiche ist wie der aktuelle Parkplatz des Fahrzeugterminals, und die zu bestätigende Parkkarte mit dem aktuellen Parkverhalten des Benutzers übereinstimmt, wobei die Rückmeldeinformationen für das Cloud-Terminal verwendet werden, um die zu bestätigende Parkkarte zu bestätigen,
wobei für die mindestens zwei Parkvorgänge mit den identischen Parkdaten eine Reife der identischen Parkdaten basierend auf einer vorbestimmten Reifebestimmungsbedingung bestimmt wird, und
wobei die zu bestätigende Parkkarte erzeugt wird, wenn die Reife der identischen Parkdaten einen vorgegebenen Reifewert erreicht,
wobei die vorbestimmte Reifebestimmungsbedingung entsprechend einem Parkverhalten, das eine Parkroute und einen entsprechenden Parkplatz umfasst, und einem Benutzerverhalten, das sich auf das Verhalten des Auswählens der Parkbestätigungsinformation durch den Benutzer oder das Verhalten des Auswählens durch den Benutzer zum Bestätigen, dass die zu bestätigende Parkkarte falsch ist, bezieht, festgelegt wird, und
die Reifebestimmungsbedingung verwendet wird, um vorbestimmte Punktzahlen bereitzustellen, die verschiedenen Parkverhalten und Benutzerverhalten entsprechen, und durch Bezugnahme auf die Reifebestimmungsbedingung die Reife der identischen Parkdaten bewertet wird, die erhaltenen Punktzahlen addiert werden und eine Summe der Punktzahlen die endgültige Reife der Parkdaten ist, wobei die Summe der Punktzahlen verwendet wird, um die Reife der identischen Parkdaten wiederzugeben.

6. Verfahren zur Erzeugung der Parkkarte nach Anspruch 5, wobei das Übertragen von Rückmeldeinformationen, die auf der Grundlage des Ergebnisses des Parkdatenvergleichs erzeugt wurden, an das Cloud-Terminal aufweist:
Anzeigen einer interaktiven Bestätigungsschnittstelle, wenn die Parkdaten der zu bestätigenden Parkkarte mit den aktuellen Parkdaten des Fahrzeugterminals identisch sind; und
Übermitteln der von einem Benutzer auf der interaktiven Bestätigungsschnittstelle erzeugten Rückmeldeinformationen an das Cloud-Terminal.

7. Vorrichtung (50) zur Kartierung einer Parkkarte, aufweisend:
ein Parkdatensammelmodul (510), das so konfiguriert ist, dass es Parkdaten von mindestens zwei Parkvorgängen von einem Fahrzeugterminal sammelt, wobei die Parkdaten eine Parkroute und einen Parkplatz anzeigen, wobei die Parkdaten von mindestens zwei Parkvorgängen Parkdaten sind, die jeweils von demselben Fahrzeugterminal in unterschiedlichen Zeiträumen gesammelt wurden;
ein Parkdatenvergleichsmodul (520), das so konfiguriert ist, dass es einen Vergleich zwischen den gesammelten Parkdaten desselben Fahrzeugterminals durchführt;
ein Modul (530) zur Erzeugung einer zu bestätigenden Parkkarte, das so konfiguriert ist, dass es für mindestens zwei Parkvorgänge mit identischen Parkdaten von demselben Fahrzeugterminal eine zu bestätigende Parkkarte erzeugt, die den identischen Parkdaten entspricht;
ein Sendemodul (540) für eine zu bestätigende Parkkarte, das so konfiguriert ist, dass es die zu bestätigende Parkkarte an das Fahrzeugterminal für einen Parkdatenvergleich mit aktuellen Parkdaten sendet, die eine aktuelle Parkroute, entlang der ein Fahrzeugterminal derzeit fährt, und einen aktuellen Parkplatz, an dem das Fahrzeugterminal parkt, umfassen, wenn eine Parkroute der zu bestätigenden Parkkarte die gleiche ist wie die aktuelle Parkroute des Fahrzeugterminals und ein Parkplatz der zu bestätigenden Parkkarte der gleiche ist wie der aktuelle Parkplatz des Fahrzeugterminals und die zu bestätigende Parkkarte mit dem aktuellen Parkverhalten des Benutzers übereinstimmt; und
ein Rückmeldeempfangsmodul (550), das konfiguriert ist, um:
Parkbestätigungsinformationen des Fahrzeugterminals über die zu bestätigende Parkkarte zu empfangen und die zu bestätigende Parkkarte in Übereinstimmung mit den Parkbestätigungsinformationen, wenn die Parkdaten der zu bestätigenden Parkkarte die gleichen sind wie die aktuellen Parkdaten des Fahrzeugterminals, zu bestätigen;
wobei das Modul (530) zur Erzeugung der zu bestätigenden Parkkarte des Weiteren so konfiguriert ist, dass es:
eine Reife der identischen Parkdaten für die mindestens zwei Parkvorgänge mit den identischen Parkdaten auf der Grundlage einer vorbestimmten Reifebestimmungsbedingung bestimmt; und
die zu bestätigende Parkkarte erzeugt, wenn die Reife der identischen Parkdaten einen vorgegebenen Reifewert erreicht,
wobei die vorbestimmte Reifebestimmungsbedingung gemäß einem Parkverhalten, das eine Parkroute und einen entsprechenden Parkplatz umfasst, und einem Benutzerverhalten, das sich auf das Verhalten des Auswählens der Parkbestätigungsinformation durch den Benutzer oder das Verhalten des Auswählens durch den Benutzer zum Bestätigen, dass die zu bestätigende Parkkarte falsch ist, bezieht, festgelegt wird; und
wobei die Reifebestimmungsbedingung verwendet wird, um vorbestimmte Punktzahlen bereitzustellen, die verschiedenen Parkverhalten und Benutzerverhalten entsprechen, und durch Bezugnahme auf die Reifebestimmungsbedingung die Reife der identischen Parkdaten bewertet wird, die erhaltenen Punktzahlen addiert werden und eine Summe der Punktzahlen die endgültige Reife der Parkdaten ist, wobei die Summe der Punktzahlen verwendet wird, um die Reife der identischen Parkdaten wiederzugeben.

8. Vorrichtung (60) zur Erzeugung einer Parkkarte, aufweisend:
ein Modul (610) zum Empfangen einer zu bestätigenden Parkkarte, das so konfiguriert ist, dass es eine zu bestätigende Parkkarte empfängt, wobei die zu bestätigende Parkkarte auf der Grundlage identischer Parkdaten von mindestens zwei Parkvorgängen, die von einem Cloud-Terminal gesammelt wurden, und von Parkdaten jedes Parkvorgangs, die eine Parkroute und einen Parkplatz anzeigen, erzeugt wird;
ein Parkdaten-Vergleichsmodul (620), das so konfiguriert ist, dass es die zu bestätigende Parkkarte mit aktuellen Parkdaten vergleicht, um ein entsprechendes Parkdaten-Vergleichsergebnis zu erzeugen, wobei die aktuellen Parkdaten eine aktuelle Parkroute umfassen, entlang der ein Fahrzeugterminal derzeit fährt, und einen aktuellen Parkplatz, an dem das Fahrzeugterminal parkt; und
ein Rückmeldeübertragungsmodul (630), das so konfiguriert ist, dass es Rückmeldeinformationen, die auf der Grundlage des Ergebnisses des Parkdatenvergleichs erzeugt wurden, an das Cloud-Terminal überträgt, wenn eine Parkroute der zu bestätigenden Parkkarte dieselbe ist wie die aktuelle Parkroute des Fahrzeugterminals und ein Parkplatz der zu bestätigenden Parkkarte derselbe ist wie der aktuelle Parkplatz des Fahrzeugterminals und die zu bestätigende Parkkarte mit dem aktuellen Parkverhalten des Benutzers übereinstimmt,
wobei für die mindestens zwei Parkvorgänge mit den identischen Parkdaten eine Reife der identischen Parkdaten auf der Grundlage einer vorbestimmten Reifebestimmungsbedingung bestimmt wird, und
wobei die zu bestätigende Parkkarte erzeugt wird, wenn die Reife der identischen Parkdaten einen vorgegebenen Reifewert erreicht,
wobei die vorbestimmte Reifebestimmungsbedingung entsprechend einem Parkverhalten, das eine Parkroute und einen entsprechenden Parkplatz umfasst, und einem Benutzerverhalten, das sich auf das Verhalten des Auswählens der Parkbestätigungsinformation durch den Benutzer oder das Verhalten des Auswählens durch den Benutzer zum Bestätigen, dass die zu bestätigende Parkkarte falsch ist, bezieht, festgelegt wird, und
wobei die Reifebestimmungsbedingung verwendet wird, um vorbestimmte Punktzahlen bereitzustellen, die verschiedenen Parkverhalten und Benutzerverhalten entsprechen, und durch Bezugnahme auf die Reifebestimmungsbedingung die Reife der identischen Parkdaten bewertet wird, die erhaltenen Punktzahlen addiert werden und eine Summe der Punktzahlen die endgültige Reife der Parkdaten ist, wobei die Summe der Punktzahlen verwendet wird, um die Reife der identischen Parkdaten wiederzugeben.

9. Vorrichtung (60) zur Erzeugung einer Parkkarte nach Anspruch 8, wobei das Rückmeldeübertragungsmodul (630) des Weiteren konfiguriert ist um:
eine interaktive Bestätigungsschnittstelle anzuzeigen, wenn die Parkdaten der zu bestätigenden Parkkarte mit den aktuellen Parkdaten des Fahrzeugterminals identisch sind; und
die von einem Benutzer auf der interaktiven Bestätigungsschnittstelle erzeugten Rückmeldeinformationen an das Cloud-Terminal zu übertragen.

10. System (70) zur Kartierung einer Parkkarte, aufweisend:
ein Cloud-Terminal (710), das die Vorrichtung (50) zur Kartierung nach Anspruch 7 aufweist; und
ein Fahrzeugterminal (720) mit der Vorrichtung (60) zur Erzeugung nach Anspruch 8.

11. Fahrzeug, aufweisend die Vorrichtung (60) zur Erzeugung einer Parkkarte nach Anspruch 8 oder 9.

12. Elektronisches Gerät mit einem Prozessor und einem Speicher, in dem ausführbare Codes gespeichert sind, wobei die ausführbaren Codes, wenn sie von dem Prozessor ausgeführt werden, den Prozessor veranlassen, das Verfahren nach einem der Ansprüche 1 bis 6 durchzuführen.

13. Computerlesbares Speichermedium, auf dem ausführbare Codes gespeichert sind, wobei die ausführbaren Codes, wenn sie von einem Prozessor ausgeführt werden, den Prozessor veranlassen, das Verfahren nach einem der Ansprüche 1 bis 6 durchzuführen.

## Revendications

1. Procédé de cartographie d'une carte de stationnement, comprenant:
collecter des données de stationnement d'au moins deux opérations de stationnement à partir d'un terminal de véhicule, les données de stationnement indiquant une route de stationnement et une place de stationnement, dans lequel les données de stationnement d'au moins deux opérations de stationnement sont des données de stationnement collectées respectivement à partir du même terminal de véhicule dans des périodes de temps différentes;
effectuer une comparaison entre les données de stationnement collectées sur le même terminal de véhicule;
générer, pour au moins deux opérations de stationnement avec des données de stationnement identiques provenant du même terminal de véhicule, une carte de stationnement à valider correspondant aux données de stationnement identiques;
transmettre la carte de stationnement à valider au terminal de véhicule pour une comparaison de données de stationnement avec des données de stationnement actuelles comprenant une route de stationnement actuel sur lequel le terminal de véhicule se déplace actuellement et une place de stationnement actuelle où le terminal de véhicule se gare, si une route de stationnement de la carte de stationnement à valider correspond à la route de stationnement actuel du terminal de véhicule et si une place de stationnement de la carte de stationnement à valider correspond à la place de stationnement actuelle du terminal de véhicule, et la carte de stationnement à valider correspond au comportement de stationnement actuel de l'utilisateur; et
si les données de stationnement de la carte de stationnement à valider sont les mêmes que les données de stationnement actuelles du terminal de véhicule, recevoir des informations de confirmation de stationnement du terminal de véhicule en relation avec la carte de stationnement à valider, et confirmer la carte de stationnement à valider conformément aux informations de confirmation de stationnement;
dans lequel créer d'une carte de stationnement à valider, correspondant aux données de stationnement identiques, pour au moins deux opérations de stationnement avec des données de stationnement identiques, comprenant:
déterminer une maturité des données de stationnement identiques pour les au moins deux opérations de stationnement avec les données de stationnement identiques sur la base d'une condition de détermination de maturité prédéterminée; et
générer la carte de stationnement à valider lorsque la maturité des données de stationnement identiques atteint une valeur de maturité prédéfinie,
dans lequel la condition de détermination de maturité prédéterminée est établie selon un comportement de stationnement comprenant une route de stationnement et une place de stationnement correspondante, et un comportement d'utilisateur se rapportant au comportement de sélection par l'utilisateur des informations de confirmation de stationnement ou au comportement de sélection par l'utilisateur pour confirmer que le carte de stationnement à valider est incorrect, et
dans lequel la condition de détermination de maturité est utilisée pour fournir des scores prédéterminés correspondant à différents comportements de stationnement et comportements d'utilisateur, et en se référant à la condition de détermination de maturité, la maturité des données de stationnement identiques est évaluée, les scores obtenus sont additionnés et une somme des scores est la maturité finale des données de stationnement, la somme des scores étant utilisée pour refléter la maturité des données de stationnement identiques.

2. Procédé de cartographie d'une carte de stationnement selon la revendication 1, comprenant en outre:
collecter de nouvelles données de stationnement à partir du terminal du véhicule en réponse au fait que les données de stationnement collectées diffèrent les unes des autres.

3. Procédé de cartographie d'une carte de stationnement selon la revendication 1, comprenant en outre:
prédéfinir une quantité prédéterminée de stockage de différentes données de stationnement indiquant différents routes de stationnement et/ou différentes places de stationnement; et
retenir les dernières données de stationnement différentes correspondant à la quantité de stockage prédéterminée lorsqu'une quantité de données de stationnement différentes collectées est supérieure à la quantité de stockage prédéterminée.

4. Procédé de cartographie d'une carte de stationnement selon la revendication 1, dans lequel la transmission de la carte de stationnement à valider au terminal de véhicule pour la comparaison de données de stationnement avec des données de stationnement actuelles comprenant:
transmettre au terminal du véhicule d'une carte de stationnement à valider qui répond à une condition de transmission prédéfinie, si plus d'une carte de stationnement à valider est générée.

5. Procédé de génération d'une carte de stationnement, comprenant:
recevoir d'une carte de stationnement à valider, la carte de stationnement à valider étant générée sur la base de données de stationnement identiques d'au moins deux opérations de stationnement collectées par un terminal cloud et de données de stationnement de chaque opération de stationnement indiquant une route de stationnement et une place de stationnement;
comparer la carte de stationnement à valider avec des données de stationnement actuelles pour produire un résultat de comparaison de données de stationnement correspondant, les données de stationnement actuelles comprenant une route de stationnement actuel le long duquel un terminal de véhicule se déplace actuellement et une place de stationnement actuel sur lequel le terminal de véhicule se gare; et
transmettre des informations de retour générées sur la base du résultat de comparaison de données de stationnement au terminal cloud si une route de stationnement de la carte de stationnement à valider est le même que la route de stationnement actuel du terminal de véhicule, et une place de stationnement de la carte de stationnement à valider est la même que la place de stationnement actuelle du terminal de véhicule, et la carte de stationnement à valider correspond au comportement de stationnement actuel de l'utilisateur, les informations de retour étant utilisées pour le terminal cloud afin de confirmer la carte de stationnement à valider,
dans lequel, pour les au moins deux opérations de stationnement avec les données de stationnement identiques, une maturité des données de stationnement identiques est déterminée sur la base d'une condition de détermination de maturité prédéterminée, et
dans lequel la carte de stationnement à valider est générée lorsque la maturité des données de stationnement identiques atteint une valeur de maturité prédéterminée,
dans lequel la condition de détermination de maturité prédéterminée est établie selon un comportement de stationnement comprenant une route de stationnement et une place de stationnement correspondante, et un comportement d'utilisateur se rapportant au comportement de sélection par l'utilisateur des informations de confirmation de stationnement ou au comportement de sélection par l'utilisateur pour confirmer que la carte de stationnement à valider est fausse, et
la condition de détermination de maturité est utilisée pour fournir des scores prédéterminés correspondant à différents comportements de stationnement et comportements d'utilisateur, et en se référant à la condition de détermination de maturité, la maturité des données de stationnement identiques est évaluée, les scores obtenus sont additionnés et une somme des scores est la maturité finale des données de stationnement, la somme des scores étant utilisée pour refléter la maturité des données de stationnement identiques.

6. Procédé de génération d'une carte de stationnement selon la revendication 5, dans lequel la transmission au terminal cloud d'informations de retour générées sur la base du résultat de la comparaison de données de stationnement comprenant:
afficher une interface de confirmation interactive lorsque les données de stationnement de la carte de stationnement à valider sont identiques aux données de stationnement actuelles du terminal du véhicule; et
transmettre au terminal cloud les informations de réponse générées par un utilisateur sur l'interface de confirmation interactive.

7. Dispositif (50) de cartographie d'une carte de stationnement, comprenant:
un module de collecte de données de stationnement (510) configuré pour collecter des données de stationnement d'au moins deux opérations de stationnement à partir d'un terminal de véhicule, les données de stationnement indiquant une route de stationnement et une place de stationnement, dans lequel les données de stationnement d'au moins deux opérations de stationnement sont des données de stationnement collectées respectivement à partir du même terminal de véhicule dans des périodes différentes;
un module (520) de comparaison de données de stationnement configuré pour effectuer une comparaison entre les données de stationnement collectées du même terminal de véhicule;
un module (530) de génération une carte de stationnement à valider, configuré pour générer, pour au moins deux opérations de stationnement ayant des données de stationnement identiques provenant du même terminal de véhicule, une carte de stationnement à valider correspondant aux données de stationnement identiques;
un module (540) de transmission de carte de stationnement à valider configuré pour transmettre la carte de stationnement à valider au terminal de véhicule pour une comparaison de données de stationnement avec des données de stationnement actuelles comprenant une route de stationnement actuel le long duquel un terminal de véhicule se déplace actuellement et une place de stationnement actuelle dans laquelle le terminal de véhicule se gare, si une route de stationnement de la carte de stationnement à valider est le même que la route de stationnement actuel du terminal de véhicule et si une place de stationnement de la carte de stationnement à valider est la même que la place de stationnement actuelle du terminal de véhicule et si la carte de stationnement à valider correspond au comportement de stationnement actuel de l'utilisateur; et
un module (550) de réception de rétroaction (550) configuré pour:
recevoir des informations de confirmation de stationnement du terminal de véhicule via la carte de stationnement à valider et confirmer la carte de stationnement à valider conformément aux informations de confirmation de stationnement si les données de stationnement de la carte de stationnement à valider sont les mêmes que les données de stationnement actuelles du terminal de véhicule;
dans lequel le module (530) de génération de la carte de stationnement à valider est en outre configuré pour:
détermine une maturité des données de stationnement identiques pour les au moins deux opérations de stationnement avec les données de stationnement identiques sur la base d'une condition de détermination de maturité prédéterminée; et
la carte de stationnement à valider est générée lorsque la maturité des données de stationnement identiques atteint une valeur de maturité prédéfinie,
dans lequel la condition de détermination de maturité prédéterminée est établie selon un comportement de stationnement comprenant une route de stationnement et une place de stationnement correspondante, et un comportement d'utilisateur se rapportant au comportement de sélection par l'utilisateur des informations de confirmation de stationnement ou au comportement de sélection par l'utilisateur pour confirmer que la carte de stationnement à valider est fausse; et
dans lequel la condition de détermination de maturité est utilisée pour fournir des scores prédéterminés correspondant à différents comportements de stationnement et comportements d'utilisateur, et en se référant à la condition de détermination de maturité, la maturité des données de stationnement identiques est évaluée, les scores obtenus sont additionnés et une somme des scores est la maturité finale des données de stationnement, la somme des scores étant utilisée pour refléter la maturité des données de stationnement identiques.

8. Dispositif (60) de génération d'une carte de stationnement, comprenant:
un module (610) pour recevoir une carte de stationnement à valider, configuré pour recevoir une carte de stationnement à valider, dans lequel la carte de stationnement à valider est générée sur la base de données de stationnement identiques d'au moins deux opérations de stationnement collectées par un terminal cloud et de données de stationnement de chaque opération de stationnement indiquant une route de stationnement et une place de stationnement;
un module (620) de comparaison de données de stationnement configuré pour comparer la carte de stationnement à valider à des données de stationnement actuelles afin de générer un résultat de comparaison de données de stationnement correspondant, les données de stationnement actuelles comprenant une route de stationnement actuel le long duquel un terminal de véhicule se déplace actuellement et une place de stationnement actuel où le terminal de véhicule se gare; et
un module (630) de transmission de rétroaction configuré pour transmettre des informations de rétroaction générées sur la base du résultat de la comparaison de données de stationnement au terminal cloud lorsqu'une route de stationnement de la carte de stationnement à valider est le même que la route de stationnement actuel du terminal de véhicule et qu'une place de stationnement de la carte de stationnement à valider est la même que la place de stationnement actuelle du terminal de véhicule et que la carte de stationnement à valider correspond au comportement de stationnement actuel de l'utilisateur,
dans lequel, pour les au moins deux opérations de stationnement avec les données de stationnement identiques, une maturité des données de stationnement identiques est déterminée sur la base d'une condition de détermination de maturité prédéterminée, et
dans lequel la carte de stationnement à valider est générée lorsque la maturité des données de stationnement identiques atteint une valeur de maturité prédéterminée,
dans lequel la condition de détermination de maturité prédéterminée est établie selon un comportement de stationnement comprenant une route de stationnement et une place de stationnement correspondante, et un comportement d'utilisateur se rapportant au comportement de sélection par l'utilisateur des informations de confirmation de stationnement ou au comportement de sélection par l'utilisateur pour confirmer que la carte de stationnement à valider est fausse, et
dans lequel la condition de détermination de maturité est utilisée pour fournir des scores prédéterminés correspondant à différents comportements de stationnement et comportements d'utilisateur, et en se référant à la condition de détermination de maturité, la maturité des données de stationnement identiques est évaluée, les scores obtenus sont additionnés et une somme des scores est la maturité finale des données de stationnement, la somme des scores étant utilisée pour refléter la maturité des données de stationnement identiques.

9. Dispositif (60) de génération une carte de stationnement selon la revendication 8, dans lequel le module (630) de transmission de rétroaction est en outre configuré pour:
afficher une interface de confirmation interactive lorsque les données de stationnement de la carte de stationnement à valider sont identiques aux données de stationnement actuelles du terminal du véhicule; et
transmettre au terminal cloud les informations de réponse générées par un utilisateur sur l'interface de confirmation interactive.

10. Système (70) de cartographie d'une carte de stationnement, comprenant:
un terminal cloud (710) comprenant le dispositif (50) pour la cartographie selon la revendication 7; et
un terminal de véhicule (720) comprenant le dispositif (60) de génération selon la revendication 8.

11. Véhicule comprenant le dispositif (60) de génération une carte de stationnement selon la revendication 8 ou 9.

12. Dispositif électronique comprenant un processeur et une mémoire dans laquelle sont stockés des codes exécutables, les codes exécutables, lorsqu'ils sont exécutés par le processeur, amenant le processeur à exécuter le procédé selon l'une quelconque des revendications 1 à 6.

13. Support de stockage lisible par ordinateur sur lequel sont stockés des codes exécutables, lesdits codes exécutables, lorsqu'ils sont exécutés par un processeur, amenant le processeur à exécuter le procédé selon l'une quelconque des revendications 1 à 6.
